# EUROPEAN PATENT APPLICATION

(11) **EP 0 951 836 A2**
(43) Date of publication of application: **27.10.1999**
(21) Application number: 99103098.2
(22) Date of filing: 17.02.1999
(51) Int. Cl.: A23K 1/00, A23N 17/00

(54) **Method for the preparation of medicated or integrated pre-mixtures for animal feeding**

(30) Priority: 22.04.1998 IT BO980251
(71) Applicant: Filozoo S.p.A., 41012 Carpi (Modena) (IT)
(72) Inventor: Martinelli, Paolo, Dr., 41100 Modena (IT)
(74) Representative: Porsia, Attilio, Dr.

(57) **Abstract**

A porous carrying mass is used, said mass being of a vegetable kind and particularly absorbing, showing a good fluidity and whose specific weight and granulometry are equivalent to the ones of feed. The carrying mass is heated to a suitable temperature and at first the active principle in powder form is dry-mixed to it, and, in a following step, said compound mass is sprinkled with liquid at a suitable temperature, which by effect of the spreading by capillarity in the porous carrying mass, due to heat, allows the active principle to penetrate the inner layers of the porous mass itself. The compounded wetted mass is mixed and kneaded for a suitable time and then cooled, so as to incorporate the active principles firmly and with a homogeneous distribution.

## Description

When it is necessary to carry out mass therapies in industrial breedings, it is common practice to use medicated feeds, obtained by mixing some specific medicated pre-mixtures of the authorised kind with basic feeds in a correct ratio.

The medicated, or at least integrated, pre-mixtures are now prepared by dry mixing, in one or several basic feeds, active principles, usually in powder form, presenting very different portions as far as both volume and weight are concerned, with non-comparable particle sizes.

Such method shows some limits and disadvantages which can be thus summarised:
- dishomogeneity of the mixture thus prepared, with the consequent administering of unsuitable amounts of active principles with negative effects on the animal's health and on the quality of its meat;
- almost general absence of cohesion between the powders of the active principles and the mass of the feed, resulting in the scattering in the air of the medicine while handling the feed, with the consequent risks run by the operator;
- at the end of a preparation cycle for a medicated pre-mixture a part of the active principles can remain within the equipment and create problems of crossed contamination, polluting the pre-mixture belonging to the following cycle. To this purpose it is necessary to point out that the present regulations consider medicated pre-mixtures as fully veterinary medicines, which should not be administered to the animal for a certain period before slaughtering it.

The present invention proposes a new method and equipment by means of which it is possible to overcome the aforesaid disadvantages and limits, allowing:
- to obtain medicated pre-mixtures which can be homogeneously scattered in the feed;
- to obtain medicated pre-mixtures which can be handled safely by operators, avoiding the risks due to an excessive scattering of powder in the working environment;
- to obtain medicated pre-mixtures incorporating medical additives effectively, so that the latter do not remain in dangerous quantity in the working equipment, so as to avoid the aforesaid phenomenon of crossed contamination;
- to obtain medicated pre-mixtures maintaining food assimilability by the animal unchanged.

These and other objects have been achieved by means of the following idea of solution. A porous carrying mass will be used, said mass being of a vegetable kind and particularly absorbing, showing a good fluidity and whose specific weight is in line with that of the feed, and whose particle size is compatible with that of the feed. This carrying mass will be heated to a suitable temperature and with said mass there will be first the dry mixing of the powdered active principle and, in a following step, said mass will be sprayed with a liquid at a suitable temperature, and, because of the phenomenon of the spreading by capillarity in the porous carrying mass, said liquid will allow the active principle to penetrate into the inner layers of said porous mass. Such imbibed mass will then be cooled so as to "catch" firmly the active principle.

Further features relating to the present invention and the advantages deriving from them will be more evident thanks to the following description of a favourite form of embodiment of said invention, shown as a mere non-limiting example in the figures of the only enclosed drawing table, where:
- Figure 1 shows a flowchart of an equipment used to carry out the method according to the invention;
- Figures 2 and 3 show the longitudinal and cross section of the mixing-imbibing unit according to a possible form of embodiment.

In order to ensure optimal features for the medicated pre-mixtures, the mass which is going to carry the active principle must meet the following requirements:
- it must have a specific weight similar to that of the basic feeds;
- it must have such a composition to be digested completely by the animal;
- it must have a particle size similar to that of the nutritional masses of the animals' feeds;
- it must have a strong attitude to absorb liquids;
- it must be compatible with the animals' feeding needs;
- the costs for its purchase and crushing to the desired particle size must be acceptable for its use;
- it must be available on the market in suitable quantities.

Preliminary tests and trials have shown that the carrying mass can advantageously consists of maize-cobs,, that is to say, the inner portion of a maize panicle, which mainly consists of a porous cellulose structure. The maize-cob is substantially made up of three portions: an outer portion and a central one, constituting the lightest portions, and an intermediate portion constituting the hard portion of the cob and having wooden features. Said wooden portion is rather hard, it has a higher density than the other two portions, it is highly absorbing and it is extremely fluid. This wooden portion shows the following features:
- its specific weight is equivalent to that of the feed;
- it has a good fluidity;
- it has a good absorption capacity for liquids.

We can therefore assume that the carrying mass to be used to the present purposes can advantageously be said wooden intermediate portion of the maize-cob, though not excluding any other carrying mass showing suitable features for the present use.

The maize-cob is crushed to the suitable particle size and it is then selected in order to separate and gather the aforesaid wooden portion which is suitably dried and on the following designed as "carrying mass". The particle sizes of said mass must range, for instance, between 850 and 560 micron.

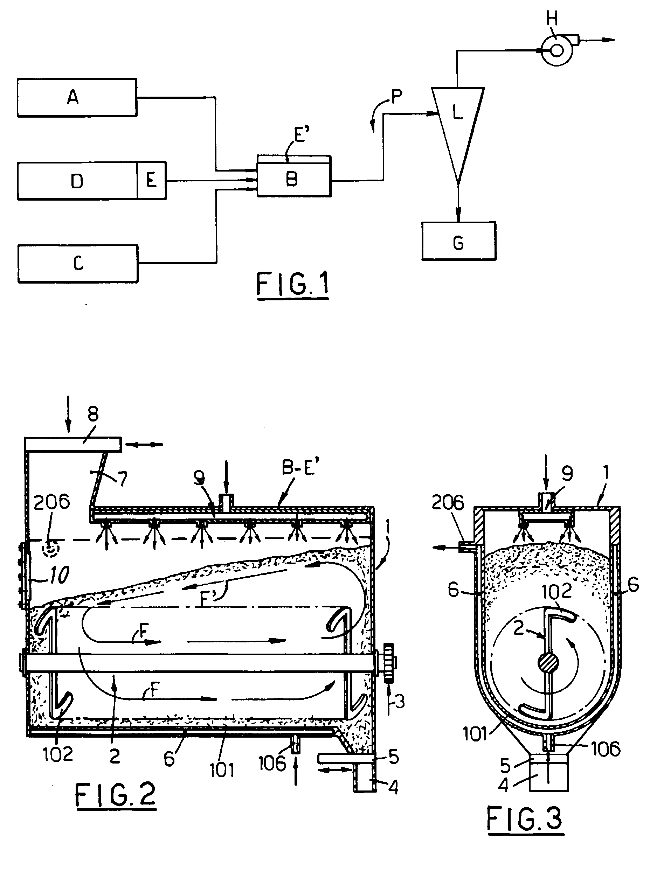

Figure 1 shows that suitable feeding means A are provided in order to take a correct amount of carrying mass from the correspondent storing unit and to introduce it into a mixing or re-mixing unit B, where suitable dosing means schematically indicated as C, automatically driven, introduce a correct amount of active principles from the corresponding storing unit. The letter E' generally indicates some means whose function is to heat unit B to a suitable temperature. For example, about 200 kg of active product are mixed into an amount of carrying mass of about 700 kg. The mixing step can last for example for five minutes and it is carried out for instance at a temperature of about 60-70°C.

After the aforesaid mixing step, and keeping on the mixing, the mass undergoes a sprinkling or spraying operation with any suitable imbibing liquid taken from the correspondent storing unit by suitable feeding means D and it is heated to a temperature by suitable means E. To this purpose the use of a suitable alcohol has proved successful, for instance propylene glycol or polyglycols, or a suitable oil, for instance white mineral oil, or a vegetable oil, for instance rape oil. With the aforesaid proportions of carrying mass and active principles the amount of imbibing liquid to be used can be for instance about 100 kg, heated to a temperature of about 90°C. The sprinkling or spraying step of the liquid on the compound mass can last for instance for about five minutes.

After this step the mass is again mixed and kneaded within unit B, at a temperature of about 60-70°C, for a period of about twenty minutes. The active principle, through the imbibing liquid, penetrates by effect of capillarity the structure of the carrying mass, which expands because of imbibition itself and of the handling temperature.

After the aforesaid last mixing and kneading step, the compounded and imbibed mass is cooled to room temperature. The pre-mixture thus obtained "catches" the active principles within its inner structure and prevents in this way all the disadvantages mentioned in the introduction to the present description.

The cooling of the medicated mass can be advantageously carried out while moving said mass from the aforesaid handling unit B to the storing unit G: to this purpose a pneumatic conveyor P may be useful, equipped with an intake unit H and a mechanical pulling down unit L, consisting of separating cyclones and filters for the cleaning of the air to be exhausted into the atmosphere. The medicated mixture, falling onto the bottom of the separator L, is conveyed into the storing unit G through known means. Such cooling and conveying system can be connected in series to several processing units, so that while one of these units is working, another one is in the discharging step, in order to ensure an almost continuous production of medicate pre-mixture.

Figures 2 and 3 show that the unit B-E' carrying out the mixing-imbibing-kneading steps consists of a suitably sized tank 1, substantially horizontal, with a bottom 101 with semicircular profile, on whose bottom a screw conveyor 2 is longitudinally placed, said screw conveyor being rotated by suitable means schematically indicated as 3 and whose blades 102 are shaped in any way so as to be able to carry out an effective mixing-kneading action and to advance the material in the direction indicated by the arrow F, towards the end of the chamber, provided with a lower discharge hole 4 having a usually shut valve 5.

The chamber 1 is equipped with jackets 6 through whose intake and drainage pipes 106-206 a heating fluid circulates, so as to keep the same aforesaid working temperature of about 60-70°C in the chamber. The chamber 1 is equipped in its upper portion, for instance in an opposite location with respect to the outlet 4, with a feeding mouth 7 through which the carrying mass and the active principles are introduced into the chamber. While the unit B-E' is working, the mouth 7 is closed by suitable means, for instance by a valve 8.

In the upper portion of the chamber 1 the means 9 are working, said means being automatically driven in order to spray downwards the correct amount of warm liquid used to imbibe the carrying mass.

The unit B-E' thus conceived works in a very simple and obvious way. Within the chamber 1 the screw conveyor 2 mixes the carrying mass and the active principles, both suitably heated, and at the same time advances the whole in the direction of the arrow F, so that the material goes up again to the right end of the chamber and re-enters the circulation by sliding on itself, according to its friction or fluidity angle, as indicated by the recirculation arrows F-F'. During the liquid spraying step on the mass of mixed product, the fluidity of said mass at first increases because of the presence of the liquid on the particles constituting the mass itself and then decreases as the liquid with the active principles penetrates the particles itself. The chamber 1 can be equipped with suitable portholes 10 allowing to monitor the working process which is carried out in said chamber. At the end of the working cycle the valve 5 is opened and the medicated pre-mixture is discharged from the chamber 1 through the outlet 4, while the screw conveyor 2 is still active. The chamber 1 will be equipped with suitable doors for inspection and inner cleaning, which are not shown in the figures.

It is evident how the whole active principle is integrated within the carrying mass and how the problems of crossed contamination, existing in the known technique, are thus completely solved.

## Claims

1. Method for the industrial preparation of medicated or integrated pre-mixtures for animal feeding, characterised by the following working steps:
- use of a carrying mass which can be added to the feed, which should be suitable to the feeding needs of the animals, fully digestible, available on the market in suitable quantities and with reduced costs, whose specific weight and granulometry should be similar to those of the particles the feeds consist of, which is suitably dried and shows good features as a liquid absorber;
- mixing, in a environment heated to a suitable temperature, of a suitable amount of said carrying mass with a suitable amount of active principles, for instance of medical nature;
- while said mixing step goes on, the compound mass is sprinkled or sprayed with a liquid suitable to the present purpose, in a correct amount, heated to a suitable temperature and used to imbibe said carrying mass and to incorporate into the latter the active principles; in the meantime the mixing and kneading step goes on for a suitable time, so as to ensure the complete incorporation of the active principle into the carrying mass;
- once the imbibition of said liquid with the active principles is over, the medicated pre-mixture is cooled and stored.

2. Method according to claim 1, where the liquid used for the imbibition of the carrying mass is such that, by effect of the spreading by capillarity in the porous carrying mass, the active principles penetrate the inner layers of the particles the carrying mass itself is made of.

3. Method according to claim 1, where during the whole carrying out of the method, the compounded mass to be handled is heated to a temperature between 50 and 80°C, preferably about 60-70°C.

4. Method according to claim 1, where the imbibing liquid is introduced into the compound mass at a higher temperature than the heating temperature of the mass, for instance at about 90°C.

5. Method according to claim 1, where the carrying mass consists of the wooden and crushed part of maize-cobs.

6. Method according to claim 1, where the imbibing liquid consists, for instance, of a suitable alcohol, for instance propylene glycol or polyglycols.

7. Method according to claim 1, where the imbibing liquid consists, for instance, of a suitable oil, for instance white mineral oil, or a vegetable oil, for instance rape oil.

8. Method according to the previous claims, where the carrying mass and the active principles are at first mixed for a period of about five minutes.

9. Method according to the previous claims, where the intermediate step consisting of the sprinkling of the imbibing liquid onto the carrying mass, which has been previously mixed with the active principles, lasts for at least five minutes.

10. Method according to the previous claims, where the final step, consisting of the mixing and kneading of the composition made up of the carrying mass, the active principles and the imbibing liquid, lasts for at least about 20 minutes.

11. Equipment for the preparation of medicated or integrated pre-mixtures for animal feed, characterised in that it comprises:
- means (A) to add a suitable amount of carrying mass, taken from a corresponding storing unit;
- means (C) to add a suitable amount of active principles, taken from a corresponding storing unit;
- means (D) to add a suitable amount of imbibing liquid, taken from a corresponding storing unit;
- means (E) to bring the imbibing liquid to the temperature needed for the use process;
- a unit (B) for the mixing and kneading of the carrying mass, the active principles and the imbibing liquid;
- means (E') for the heating of said mixing and kneading unit (B);
- means (P, L, H) for the cooling and conveying to a suitable storing unit (G) of the medicated pre-mixture prepared in said mixing and kneading unit.

12. Equipment according to claim 11, where the mixing and kneading unit (B-E') consists of a closed horizontal chamber (1), with a rounded bottom (101), onto which a screw conveyor has been longitudinally placed, said screw conveyor rotating at a suitable speed in such a direction to cause the material to be mixed and to be conveyed towards a outlet (4), usually shut by suitable valve means (5) and which has to be placed onto the end of the chamber against which the material stops, goes up again and re-enters the circulation by sliding on itself, said chamber being provided in its upper portion with a mouth (7) for the feeding of the materials to be handled, said mouth also being equipped with closing means (8), and the upper portion of the chamber itself being provided with means (9) for the automatically driven feeding of the imbibing liquid, and the chamber itself being provided with jackets (6) in which circulates a fluid for the heating of the products to be handled in the same unit.

13. Equipment according to claim 11, where means (P) for the cooling and conveying of the medicated pre-mixture from the process unit (B-E') to the storing unit (G), consist of pneumatic conveyors (P), provided with cyclone separators (L) and with filters for the cleaning of the air to be exhausted into the atmosphere.

14. Medicated pre-mixture obtained by means of the method and of the equipment previously claimed, characterised in that it comprises as a carrying mass a material of vegetable origin, whose specific weight and granulometry are similar to those of the feeds, which should be suitable for animal needs and completely digestible, and also showing a good behaviour as far as liquid absorption is concerned, said mass consisting for example of the wooden part of maize-cob, crushed to a suitable granulometry and dried, and said mass being imbibed with any suitable liquid, which, during the step of spreading by capillarity in the carrying mass, allows the medical active principles associated to the pre-mixture to penetrate the inner layers of said mass and/or to remain firmly linked to that mass.
